Europäisches Patentamt

European Patent Office

Office européen des brevets

(19)

(11) **EP 1 107 493 A1**

(12) **EUROPEAN PATENT APPLICATION**
published in accordance with Art. 158(3) EPC

(43) Date of publication:
**13.06.2001 Bulletin 2001/24**

(51) Int Cl.⁷: $H04J\ 11/00$

(21) Application number: **00931596.1**

(22) Date of filing: **29.05.2000**

(86) International application number:
**PCT/JP00/03433**

(87) International publication number:
**WO 00/79717 (28.12.2000 Gazette 2000/52)**

(84) Designated Contracting States:
**AT BE CH CY DE DK ES FI FR GB GR IE IT LI LU MC NL PT SE**

(30) Priority: **17.06.1999 JP 17102699**

(71) Applicant: **MITSUBISHI DENKI KABUSHIKI KAISHA Tokyo 100-8310 (JP)**

(72) Inventors:
• **KIMURA, Toru, Mitsubishi Denki Kabushiki Kaisha Tokyo 100-8310 (JP)**
• **MATSUMOTO, Wataru, Mitsubishi Denki K. K. Tokyo 100-8310 (JP)**

(74) Representative: **Pfenning, Meinig & Partner Mozartstrasse 17 80336 München (DE)**

(54) **COMMUNICATION DEVICE AND COMMUNICATION METHOD**

(57) In communication based upon a multi-carrier modulation/demodulation system in which data is allocated to a plurality of carriers (tones) to be transmitted, a per unit transmission efficiency of transmission power is to be improved through an efficient consumption of transmission power for each carrier. In order to attain such a performance, a communication system for transmitting data which is allocated to a plurality of tones is provided with a transmission power calculation unit 91 for calculating an amount of transmission power needed to transmit a certain integer number of bits to be allocated to each tone and a transmission power re-allocation unit 92 for re-allocating transmission power to the plurality of tones based upon a calculation result from the transmission power calculation unit 91 so that the average transmission power of transmission power to be allocated to the respective tones is leveled.

Fig. 1

**Description**

Technical Field

The present invention relates to, for example, a communication system and a communication method for transmitting data based upon a multi-carrier modulation/demodulation system such as a DMT (Discrete MultiTone) modulation/demodulation system, in which data is allocated to a plurality of tones.

Background Art

It has been suggested in recent years that a multi-carrier (multi-tone) communication system such as the DMT modulation/demodulation system and an OFDM (Orthogonal Frequency Division Multiplex) modulation/demodulation system should be applied to a modulation/demodulation system employed in a cable digital communication system.

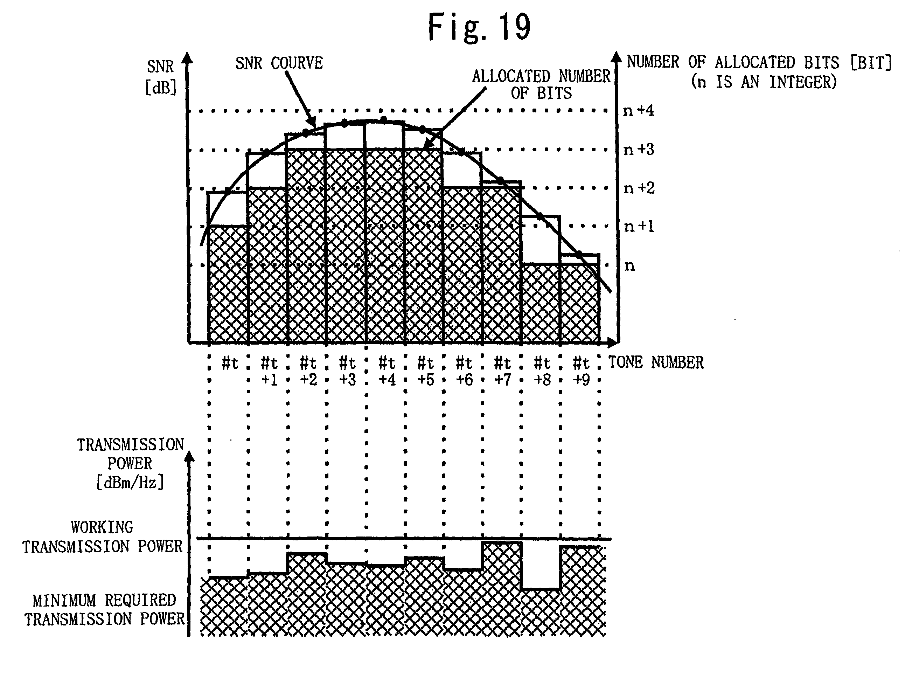

Fig. 19 is a graph illustrating a bit allocating operation performed in the DMT modulation/demodulation system. The number of bits to be allocated to a tone may be determined by the signal-to-noise (SN) ratio of the tone theoretically. In fact, however, there is a limit that only an integer number of bits is allocable to the tone. For that reason, it is a conventional practice to apply a value obtained by omitting the decimals of a theoretical number of bits to be allocated to a practical number of bits allocated to the tone.

The conventional practice of calculating the number of bits to be allocated to each tone is described below. An SN ratio (SNR) is obtained by the ratio of transmission line loss (Loss) to transmission power Q and external noise (PSD). The SN ratio (SNR) of this case is described by an equation (16).

$$\text{SNR=Q [dBm/Hz] - Loss [dB] - PSD [dBm/Hz]} \qquad (16)$$

Based upon an obtained SN ratio (SNR) for each tone calculated by the equation (16) above, bt (the number of bits to be allocated to each tone) is calculated by an equation (17). The decimals of a calculated value of the number of bits to be allocated to each tone is omitted or the value is rounded down. Referring to the equation, an alphabet t added to b of bt denotes a tone number and $\Gamma$ denotes a correction value.

$$\text{bt = ROUNDDOWN}\{\log_2(1+(10\text{^}(\text{SNR[dB]}/10)/10\text{^}(\Gamma[\text{dB}]/10)))\} \qquad (17)$$

The thus obtained decimal omitted value calculated by the equation (17) above is applied to the practical number of bits to be allocated to each tone.
However, the above described conventional bit allocation to each carrier (tone) based upon the multi-carrier modulation/demodulation system poses a problem. Specifically, owing to the limitation that only an integer number of bits is allocable to each tone, a value obtained by omitting the decimals of a theoretically calculated value has to be applied to the practical number of bits to be allocated to each tone. For that reason, in order for allocating a decimal omitted number of bits obtained through the equation (17) above to a tone, only the minimum required transmission power is required, which is lower than working transmission power as shown in the graph of Fig. 19. Thus, as a result, there is waste of transmission power caused by a difference between the working transmission power and the minimum required transmission power according to the conventional bit allocation practice.
It is an object of the present invention to provide a communication system and a communication method which may improve a transmission efficiency per unit of transmission power through an efficient consumption of transmission power for each carrier in data communication based upon the multi-carrier modulation/demodulation system in which data is allocated to a plurality of carriers (tones), for example.

Disclosure of the Invention

According to one aspect of one embodiment of the present invention, a communication system for allocating data to a plurality of tones, and for transmitting the data, may includes,

a transmission power calculation unit for calculating transmission power needed to transmit a certain integer number of bits, for each of the plurality of tones, and
a transmission power re-allocation unit for re-allocating the transmission power to the each of the plurality of tones so that average transmission power of the transmission power to be allocated to the each of the plurality of tones is leveled, based upon a calculation result calculated by the transmission power calculation unit.

The transmission power re-allocation unit may re-allocate the transmission power to the each of the plurality of tones to set a transmission power value within a certain range so that the average transmission power of the transmission power to be allocated to the each of the plurality of tones is leveled.

The transmission power calculation unit, in a case that a number of allocable bits to the each of the plurality of tones is limited, may calculate the transmission power needed to transmit an integer number of bits within a limit.

The transmission power calculation unit may calculate supplemental transmission power which is needed to add one bit to the certain number of bits, for the each of the plurality of tones, and the transmission power re-allocation unit may re-allocate the transmission power to the each of the plurality of tones in ascending order of the supplemental transmission power.

According to another aspect of one embodiment of the present invention, a communication method for allocating data to a plurality of tones, and for transmitting the data may include,

in a case that a number of allocable bits to each of the plurality of tones is limited, calculating transmission power needed to transmit an integer number of bits within a limit, and

based upon a calculation result, re-allocating the transmission power to the each of the plurality of tones to set a transmission power value within a certain range so that average transmission power of the transmission power to be allocated to each of the plurality of tones is leveled.

The calculating transmission power needed to transmit an integer number of bits may include setting the transmission power of a minimum value within the certain range to a tone whose number of allocable bits is more than a maximum integer number of bits within the limit in a case that the transmission power of the minimum value within the certain range is set, and the re-allocating the transmission power to the each of the plurality of tones may include re-allocating to other tones of the plurality of tones surplus transmission power which is surplus to the average transmission power obtained by the transmission power being set to the minimum value.

The calculating transmission power needed to transmit an integer number of bits may include setting the transmission power of a minimum value within the certain range to a tone whose number of allocable bits is less than a minimum integer number of bits within the limit in a case that the transmission power of a maximum value within the certain range is set, and the re-allocating the transmission power to the each of the plurality of tones may include re-allocating to other tones of the plurality of tones surplus transmission power which is surplus to the average transmission power obtained by the transmission power being set to the minimum value.

The calculating transmission power needed to transmit an integer number of bits may include setting the transmission power of a minimum value within the certain range to a tone whose number of allocable bits is a zero bit in a case that the transmission power of a maximum value within the certain range is set, and the re-allocating the transmission power to the each of the plurality of tones may include re-allocating to other tones of the plurality of tones surplus transmission power which is surplus to the average transmission power obtained by the transmission power being set to the minimum value.

The calculating transmission power needed to transmit an integer number of bits may include setting the transmission power of a minimum value within the certain range to a tone whose is not subject to a bit allocation, and the re-allocating the transmission power to the each of the plurality of tones may include re-allocating to other tones of the plurality of tones surplus transmission power which is surplus to the average transmission power obtained by the transmission power being set to the minimum value.

The calculating transmission power needed to transmit an integer number of bits may include calculating supplemental transmission power which is needed to add one bit each to the certain number of bits, for the each of the plurality of tones, until the transmission power reaches the maximum value within the certain range, and the re-allocating the transmission power to the each of the plurality of tones may include re-allocating the surplus transmission power to the other tones of the plurality of tones in ascending order of the supplemental transmission power which is needed to add one bit each to the certain number of bits.

Brief Description of the Drawings

Fig. 1 shows a functional block diagram of a transmitting section of an example of communication system according to the present invention.

Fig. 2 shows a flow chart illustrating an operation for processing a tone whose number of allocated bits is more than bmax in the case that the transmission power is set to Q-q.

Fig. 3 shows a graph illustrating the operation for processing the tone whose number of allocated bits is more than bmax in the case that the transmission power is set to Q-q.

Fig. 4 shows another graph illustrating the operation for processing the tone whose number of allocated bits is more than bmax in the case that the transmission power is set to Q-q.

Fig. 5 shows a flow chart illustrating an operation for processing a tone whose number of allocated bits is less than bmin in the case that the transmission power is set to Q+q.

Fig. 6 shows a graph illustrating the operation for processing the tone whose number of allocated bits is less than bmin in the case that the transmission power is set to Q+q.

Fig. 7 shows another graph illustrating the operation for processing the tone whose number of allocated bits is less than bmin in the case that the transmission power is set to Q+q.

Fig. 8 shows a flow chart illustrating an operation for processing a tone whose number of allocated bits is more than bmax in the case that the transmission power is set to Q.

Fig. 9 shows a graph illustrating the operation for processing the tone whose number of allocated bits is more than bmax in the case that the transmission power is set to Q.

Fig. 10 shows another graph illustrating the operation for processing the tone whose number of allocated bits is more than bmax in the case that the transmission power is set to Q.

Fig. 11 shows a flow chart illustrating a provisionally determining operation of a tone other than those being extracted in (1) through (3).

Fig. 12 shows a graph illustrating the provisionally determining operation of the tone other than those which are extracted in (1) through (3).

Fig. 13 shows another graph illustrating the provisionally determining operation of the tone other than those which are extracted in (1) through (3).

Fig. 14 shows a flow chart illustrating a determining operation of the tone other than those which are extracted in (1) through (3).

Fig. 15 shows a graph illustrating the determining operation of the tone other than those which are extracted in (1) through (3).

Fig. 16 shows another graph illustrating the determining operation of the tone than those which are extracted in (1) through (3).

Fig. 17 shows a flow chart illustrating an operation for totaling amounts of re-allocable surplus transmission power.

Fig. 18 shows a flow chart illustrating an operation for re-allocating the surplus transmission power.

Fig. 19 shows an explanatory diagram illustrating a conventional operation for allocating bits to tones according to a DMT modulation/demodulation system.

Best Mode for Carrying Out the Invention

Embodiment 1.

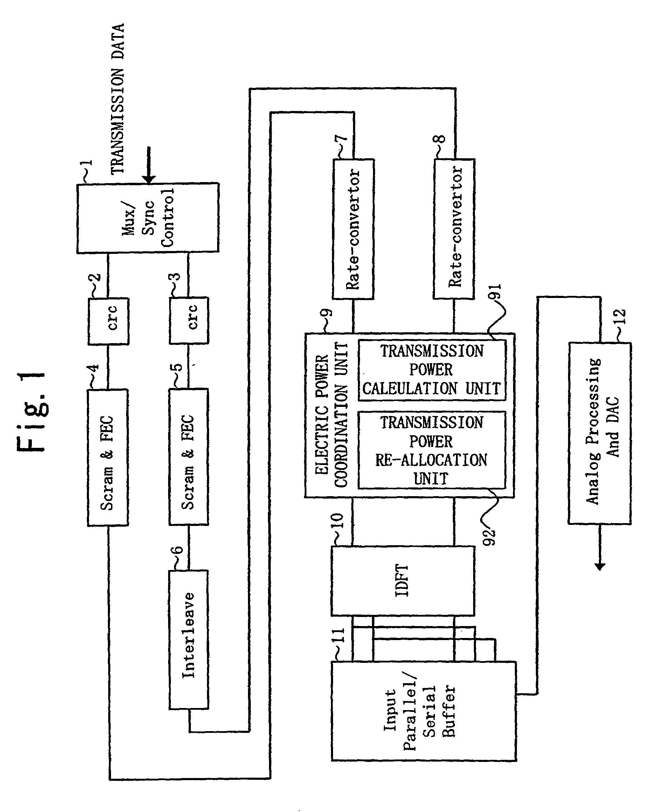

Fig. 1 shows a functional block diagram illustrating the configuration of the transmitting section or transmitter (which will be referred to hereinafter as the transmission system) such as a communication modem of an ADSL central office end device (ATU-C; ADSL Transceiver Unit, Central Office end) and an ADSL remote terminal end device (ATU-R; ADSL Transceiver unit, Remote Terminal end) in a functional manner. The ADSL central office end device and the ADSL remote terminal end device are designed for performing bit allocation based upon a DMT modulation/demodulation system according to an embodiment of the present invention.

Referring now to Fig. 1, a reference numeral 1 denotes multiplex/sync control (Mux/Sync Control). Reference numerals 2 and 3 each denote cyclic redundancy check (crc). Reference numerals 4 and 5 each denote scramble and forward error correction (Scram and FEC). A reference numeral 6 denotes interleave. Reference numerals 7 and 8 each denotes a rate convertor (Rate-Convertor). A reference numeral 9 denotes an electric power coordination unit which includes a transmission power calculation unit 91 and a transmission power re-allocation unit 92. A reference numeral 10 denotes an inverse discrete Fourier Transform (IDFT) unit. A reference numeral 11 denotes an input parallel/serial buffer (Input Parallel/Serial Buffer). A reference numeral 12 denotes an analog processing and D/A converter (Analog Processing and DAC). The electric power coordination unit 9 is provided further with a conventional tone ordering function and a conventional constellation encoder & gain-scaling function.

An operation for transmitting data by the transmission system of the ADSL central office end device (ATU-C) is now described in the case of the data being transmitted from the ADSL central office end device (ATU-C) to the ADSL remote terminal end device (ATU-R).

Referring to Fig. 1, transmission data is multiplexed through multiplex/sync control 1. A code for error detection is then added to the multiplexed data through cyclic redundancy check 2, 3. Then, a code for FEC is added to the transmission data, which is then subjected to scrambling through forward error correction 4, 5. The transmission data is then processed through interleave 6, if it is necessary. Subsequently, the transmission data is subject to rate conversion through the rate-converter 7,8. Then, the transmission data is subject to tone-ordering in the electric power coordination unit 9 by means of the transmission power calculation unit 91 and the transmission power re-allocation unit 92 to produce constellation data. Then, the consultation data is subject to inverse-discrete Fourier transformation in the inverse-discrete Fourier transformation unit 10 and the parallel data is converted into serial data in the input parallel/serial buffer 11. Finally, the digital waveform of the serial data is converted into an analog waveform and then subjected to low-pass filtering.

According to this first embodiment, the descriptions will be made with such an assumption that average transmission power is set to Q and that transmission power can change within the range of Q$\pm$q. Further in the descriptions, a maximum number of allocable bits to each tone is represented by bmax and a minimum number of allocable bits to each tone is represented by bmin.

An operation performed by the electric power coordination unit 9 is now discussed.

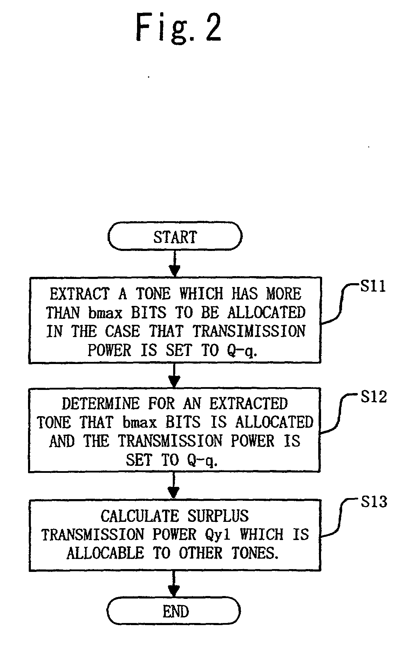

(1) Processing a tone whose number of allocated bits is more than bmax in the case that the transmission power is set to Q-q (See Fig. 2):

In the case of reducing transmission power by q=2.5 dBm, it may be calculated to allocate more than bmax=15 bits to a tone. In that case, the tone is allowed to have a maximum value of the number of bits to be allocated with a minimum value of transmission power. In other words, with the average transmission power Q=-40 dBm/Hz as a criterion, the maximum number of allocable bits of bmax=15 bits can be allocated to the tone with the minimum transmission power of Q-q=-42.5 dBm/Hz. As a result, a surplus of transmission power amounting to q=2.5 dBm can be obtained per tone. The resultant surplus transmission power is allowed to be allocated to other tones. A method for calculating an amount of the surplus transmission power of this case will be discussed below with reference to the flow chart of Fig. 2.

(1-1) Extracting a tone:

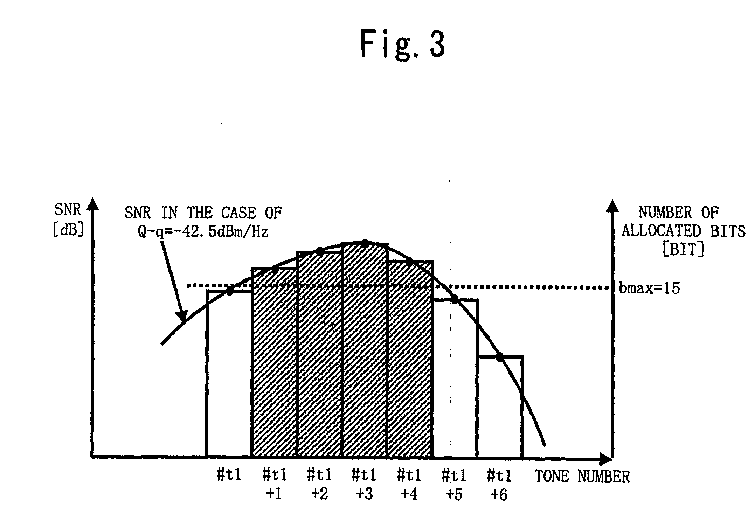

As shown in Fig. 3, in the case that the transmission power is set to Q-q=-42.5 dBm/Hz, a tone is extracted if having more than bmax=15 bits calculated to be allocated (step S11).

First of all, the SN ratio of an extracted tone is calculated. The SN ratio (SNR) can be obtained by the ratio of transmission line loss (Loss) to the transmission power Q-q and external noise (PSD). The SN ratio (SNR) of this case is described by an equation (1).

$$SNR=(Q[dBm/Hz]-q[dBm])-Loss[dB]-PSD[dBm/Hz] \tag{1}$$

Secondly, based upon a per tone SNR calculated above, bt (the number of bits to be allocated to the extracted tone) is calculated by an equation (2). The decimals of a calculated value of the number of bits to be allocated should remain. Referring to the equation, an alphabet t added to b of bt designates a tone number and $\Gamma$ designates a correction value.

$$bt=\{\log_2(1+(10^{\wedge}(SNR[dB]/10)/10^{\wedge}(\Gamma[dB]/10)))\} \tag{2}$$

Then, a tone is extracted if having bt more than bmax=15 bits. The number of extracted tones is defined as nl.

(1-2) Determining the number of bits to be allocated to the extracted tone and an amount of transmission power to be assigned:

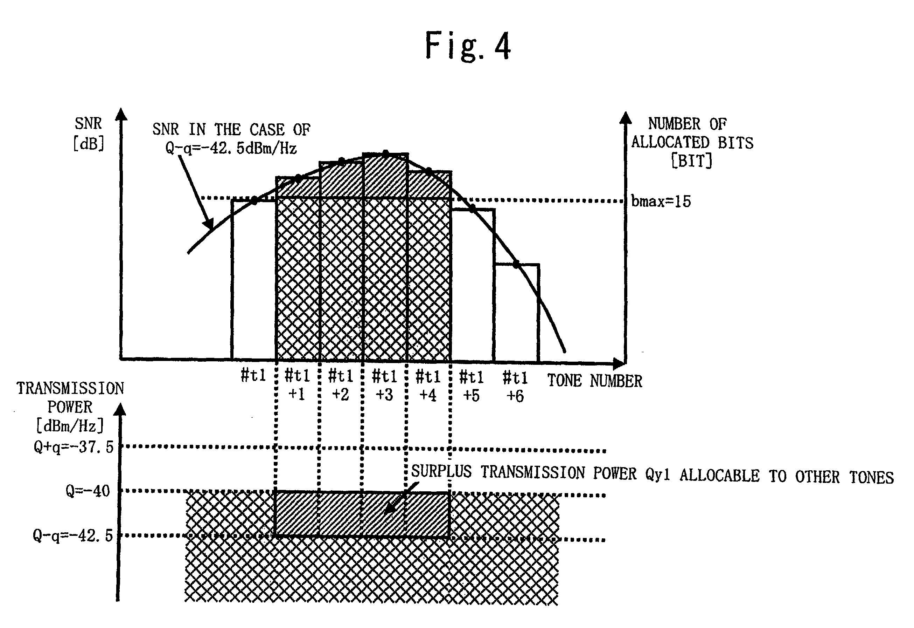

As shown in Fig. 4, it is determined that bmax=15 bits are allocated to the extracted tone and the transmission power is set to Q-q=-42.5 dBm/Hz (step S12).

(1-3) Calculating surplus transmission power Qyl allocable to other tones:

As shown in Fig. 4, the surplus transmission power Qyl which is allocable to other tones obtained from the nl number of tones extracted in the step Sll is described by an equation (3) (step S13).

$$Qy1=q\times n1 \tag{3}$$

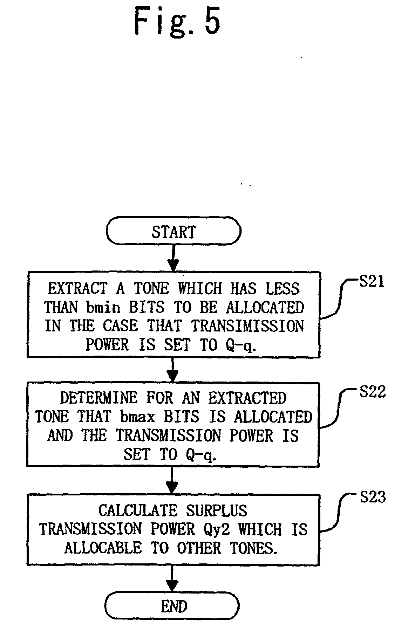

(2) Processing a tone whose number of allocated bits is less than bmin in the case that the transmission power is set to Q+q (See Fig. 5):

In the case of increasing transmission power by q=2.5 dBm, it may be calculated to allocate less than min=2 bits to a tone. In that case, the tone is not allowed to have a minimum value of the number of bits to be allocated even with a maximum value of transmission power. In other words, the minimum number of allocable bits of bmin=2 bits can not be allocated to the tone even with the maximum transmission power of Q+q=-37.5 dBm/Hz. In this case, it is determined that a zero (0) bit is allocated to the tone and the transmission power is set to the minimum transmission power of Q-q=-42.5 dBm/Hz. As a result, a surplus of transmission power amounting to q=2.5 dBm per tone can be obtained. The resultant surplus transmission power is allowed to be allocated to other tones. A method for calculating an amount of the surplus transmission power of this case will be discussed below with reference to the flow chart of Fig. 5.

(2-1) Extracting a tone:

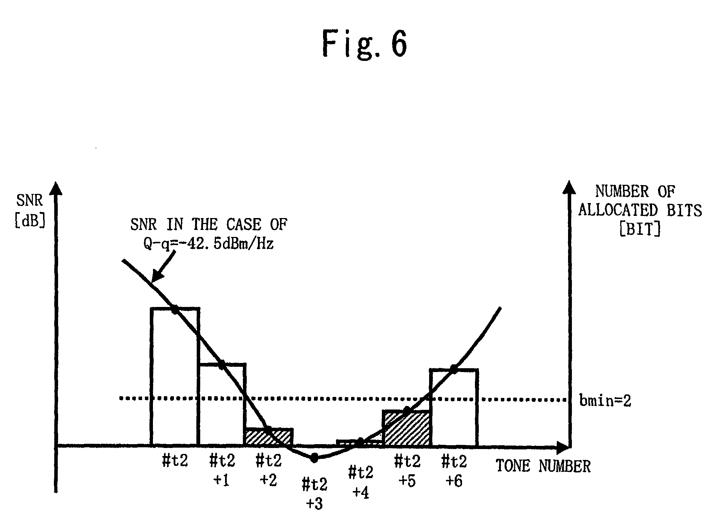

As illustrated in Fig. 6, a tone is extracted if having less than bmin=2 bits to be allocated when the transmission power is set to Q+q=-37.5 dBm/Hz (step S21).

First of all, the SN ratio of an extracted tone is calculated. The SN ratio (SNR) can be obtained by the ratio of transmission line loss (Loss) to the transmission power Q+q and external noise (PSD). The SNR of this case is described by an equation (4).

$$SNR=(Q[dBm/Hz]+q[dBm])-Loss[dB]-PSD[dBm/Hz] \tag{4}$$

Secondly, based upon a per tone SNR calculated above, bt (the number of bits to be allocated to the extracted tone) is calculated by the equation (2) above. The decimals of a calculated value of the number of bits to be allocated to each tone should remain.

Then, a tone is extracted if having bt less than bmin=2 bits. The number of extracted tones is defined as n2.

(2-2) Determining the number of bits to be allocated to the extracted tone and an amount of transmission power:

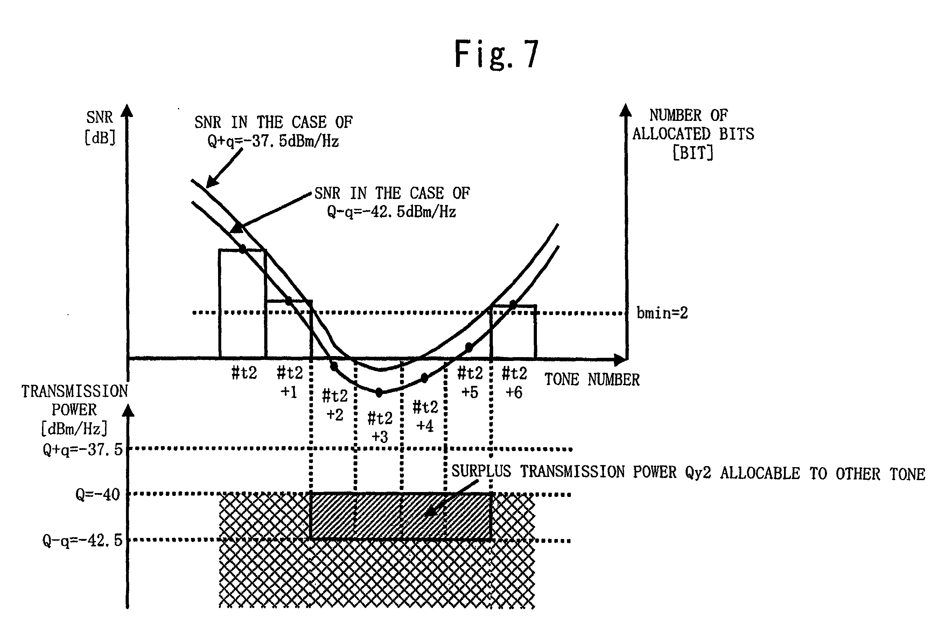

As illustrated in Fig. 7, it is determined that a zero (0) bit is allocated to the extracted tone and the transmission power is set to Q-q=-42.5 dBm/Hz (step S22).

(2-3) Calculating surplus transmission power Qy2 allocable to other tones:

As illustrated in Fig. 7, the surplus transmission power Qy2 which is allocable to other tones obtained from the n2 number of tones extracted in the step S21 is described by an equation (5) (step S23).

$$Qy2=q\times n2 \tag{5}$$

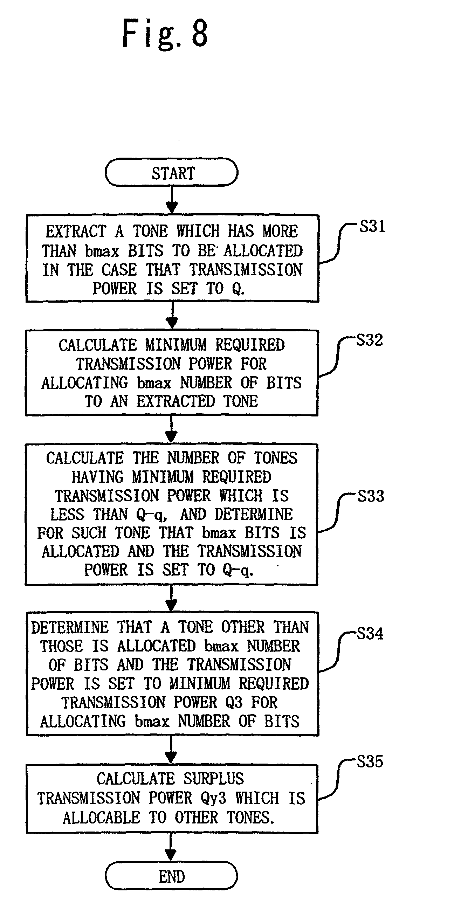

(3) Processing a tone whose number of allocated bits is more than bmax when the transmission power is set to Q (See Fig. 8) :

With tones other than those extracted in (1) and (2) above, in the case that the transmission power is set to Q=-40 dBm/Hz, it may be calculated to allocate more than bmax=15 bits to a tone. In that case, the tone is allowed to have the maximum number of allocable bits of bmax=15 to be allocated with the transmission power Q=-40 dBm/Hz. Then, it is determined that bmax=15 bits are allocated to such a tone with minimum requiring transmission power for allocating the bmax=15 bits thereto. As a result, a surplus of transmission power amounting to {Q-(minimum requiring transmission power for allocating bmax to the tone)} dBm can be obtained per tone. The resultant surplus transmission power is allocable to other tones. A method for calculating an amount of the surplus transmission power of this case will be described below with reference to the flow chart of Fig. 8.

(3-1) Extracting a tone:

①Extracting a tone:

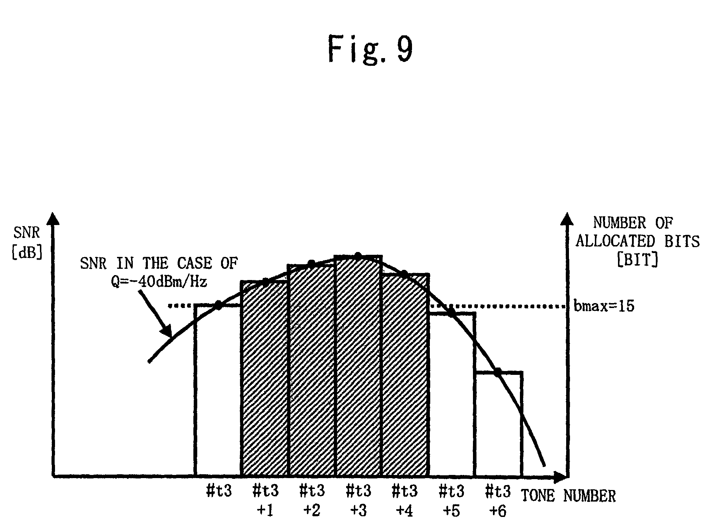

As illustrated in Fig. 9, a tones is extracted if having more than bmax=15 bits to be allocated in the case that the transmission power is set to Q=-40 dBm/Hz (step S31).

Initially, the SN ratio of an extracted tone is calculated. The SN ratio (SNR) is obtained by the ratio of transmission line loss (Loss) to the transmission power Q and external noise (PSD). The SN ratio (SNR) of this case is described by an equation (6). This equation (6) is identical to the equation (16) of the conventional art.

$$SNR=Q[dBm/Hz]-Loss[dB]-PSD[dBm/Hz] \qquad (6)$$

Secondly, based upon a per tone SNR calculated above, bt (the number of bits to be allocated to the extracted tone) is calculated by the equation (2) above. The decimals of a calculated value of the number of bits to be allocated should remain.

Then, a tone is extracted if having more bt than bmax=15 bits.

②Calculating transmission power Q3:

The transmission power Q3 which is minimum requiring transmission power for allocating bmax to the extracted tone is calculated (step S32).

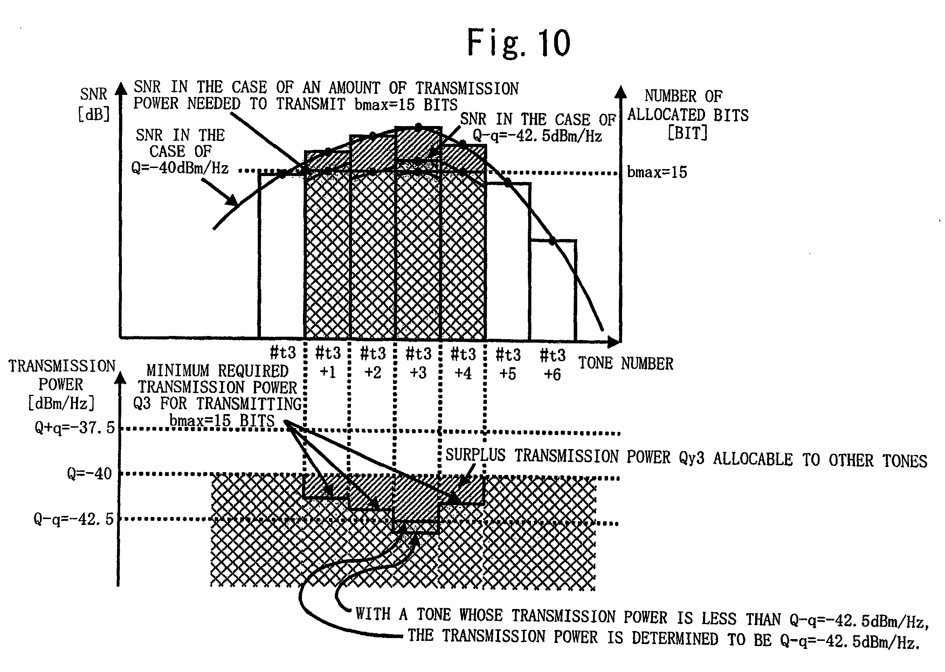

As illustrated in Fig. 10, based upon the above equations (2) and (6), the transmission power Q3, the minimum requiring transmission power for allocating bmax to the extracted tone, is described by an equation (7) below when bt=bmax=15 bits.

$$Q3=10\log_{10}(2^{bmax}-1)+Loss[dB]+PSD[dBm/Hz]+\Gamma \qquad (7)$$

(3-2) Determining the number of bits to be allocated to the extracted tone and an amount of transmission power to be assigned:

①A tone whose minimum requiring transmission power is less than Q-q:

As illustrated in Fig. 10, the minimum requiring transmission power of a tone may be less than Q-q=-42.5 dBm/Hz. In that case, the number of such tones is calculated and then it is determined that the transmission power is set to Q-q=-42.5 dBm/Hz and bmax=15 bits are allocated to such a tone (step S33). The number of such tones is defined as n3 if each of the tones minimum requires less than Q-q=-42.5 dBm/Hz of transmission power.

②Tones other than those above:

As illustrated in Fig. 10, it is determined that bmax=15 bits are allocated to a tone other than those discussed above and the transmission power is set to the transmission power Q3 which is minimum requiring transmission power for allocating bmax=15 bits to the tone (step S34).

(3-3) Calculating surplus transmission power Qy3 allocable to other tones:

As illustrated in Fig. 10, the surplus transmission power Qy3 allocable to other tones is calculated by an equation (8) based upon the transmission power Q3 calculated in step S32 and the n3 number of tones calculated in the step S33 (step S35).

$$Qy3=q \times n3+\Sigma(Q-Q3) \qquad (8)$$

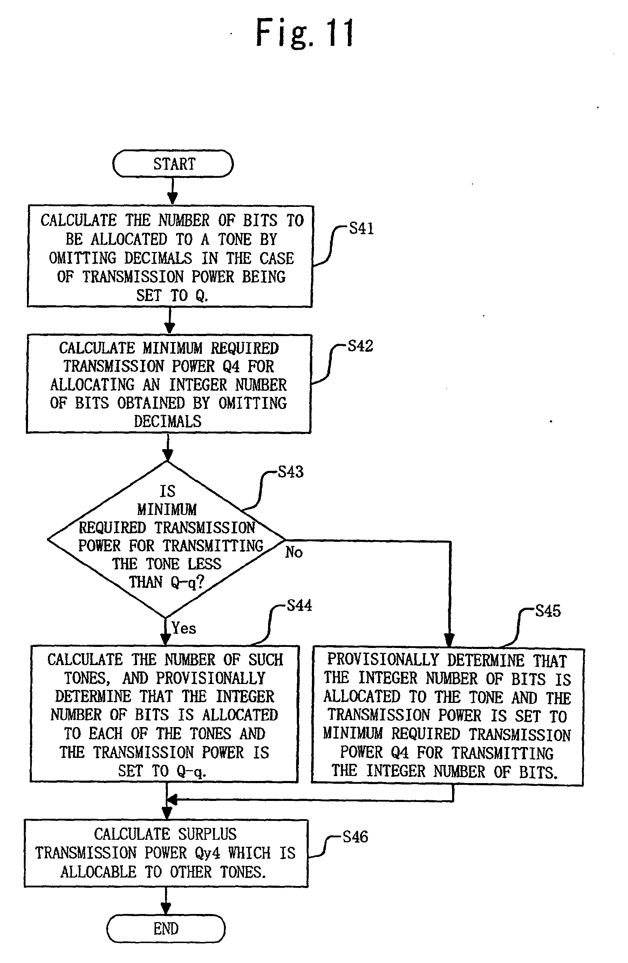

(4) Provisional determination for tones other than those extracted in (1) through (3) above (See Fig. 11):

With tones other than those extracted in (1) through (3) discussed above, the decimals of the number of bits to be allocated to a tone calculated on condition that the transmission power is set to Q=-40 dBm/Hz, is omitted to obtain an integer value. Then, minimum requiring transmission power for allocating the integer number of bits to the tone is provisionally determined. As a result, a surplus of transmission power amounting to {Q-(minimum requiring transmission power for allocating the integer number of bits to the tone)} dBm can be obtained per tone. The resultant surplus transmission power is allocable to other tones. A method for calculating an amount of surplus transmission power of this case will be discussed below with reference to the flow chart of Fig. 11.

(4-1) Calculating the number of bits to be allocated to the tone and an amount of transmission power:

①Calculating the number of bits to be allocated to the tone by omitting decimals:

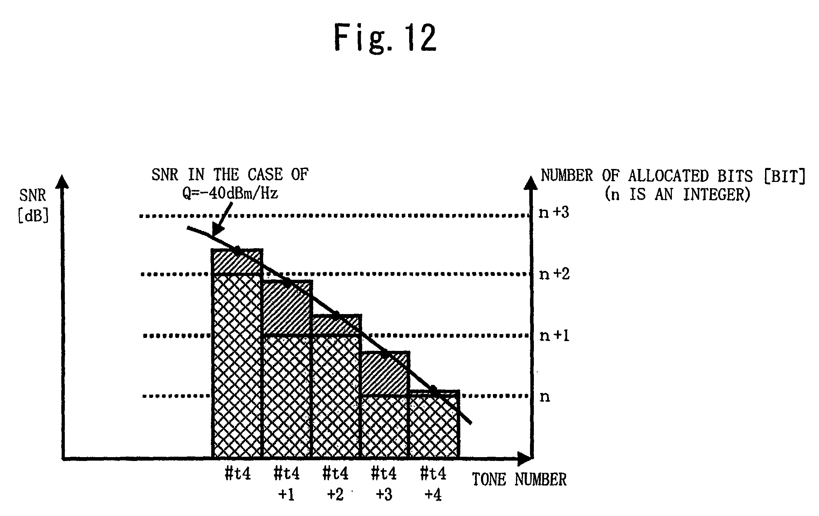

As illustrated in Fig. 12, the number of bits to be allocated to the tone is calculated on condition that the transmission power is set to Q=-40 dBm/Hz and the decimals of a calculated number of bits are omitted (step S41).
Initially, the SN ratio of the tone is calculated. The SN ratio (SNR) can be obtained by the ratio of transmission line loss (Loss) to the transmission power Q and external noise (PSD). The SN ratio (SNR) of this case is obtained by the equation (6) above.
Secondly, based upon a per tone SNR calculated above, bt (the number of bits to be allocated to the tone) is calculated by an equation (9). The decimals of a calculated value of the number of bits to be allocated to the tone are to be omitted. Referring to the equation, an alphabet t added to b of bt represents a tone number.

$$bt=ROUNDDOWN\{\log_2(1+(10^{\wedge}(SNR[dB]/10)/10^{\wedge}(\Gamma[dB]/10)))\} \tag{9}$$

①Calculating transmission power Q4:

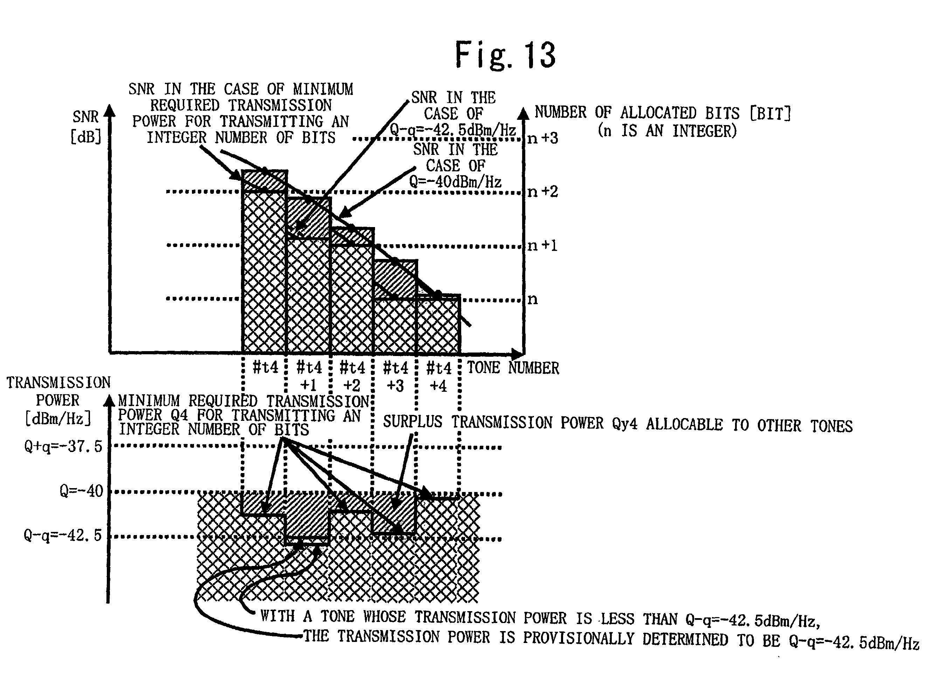

The transmission power Q4 which is minimum requiring transmission power for allocating the integer number of bits to the tone obtained by omitting decimals is calculated (step S42).
As illustrated in Fig. 13, based upon the equations (1) and (2) above, the transmission power Q4, the minimum requiring transmission power for allocating the integer number of bits to the tone obtained by omitting decimals is described by an equation (10).

$$Q4=10\log_{10}(2^{bt}-1)+Loss[dB]+PSD[dBm/HzJ+\Gamma \tag{10}$$

(4-2) Provisional determination of the number of bits to be allocated to the tone and an amount of transmission power:

①A tone whose minimum requiring transmission power is less than Q-q:

As illustrated in Fig. 13, the minimum requiring transmission power of a tone may be less than Q-q=-42.5 dBm/Hz (when Yes is selected in the step S43). In that case, the number of such tones is calculated and then it is provisionally determined that the transmission power is set to Q-q=-42.5 dBm/Hz and the obtained integer number of bits are allocated to such a tone (step S44). The number of such tones is defined as n4 if each of the tones has the minimum requiring transmission power of less than Q-q=-42.5 dBm/Hz.

②Tones other than those above:

As illustrated in Fig. 13, in the case of a tone other than those above (when No is selected in the step S43), it is provisionally determined that the integer number of bits is allocated to the tone and the transmission power is set to the transmission power Q4 which is the minimum requiring transmission power for allocating the integer number of bits to the tone (step S45).

(4-3) Calculating surplus transmission power Qy4 allocable to other tones:

As illustrated in Fig. 13, the surplus transmission power Qy4 allocable to other tones is calculated by an equation (11) based upon the transmission power Q4 calculated in the step S42 and the n4 number of tones calculated in the step S44 (step S46).

$$Qy4 = q \times n4 + \Sigma \, (Q-Q4) \tag{11}$$

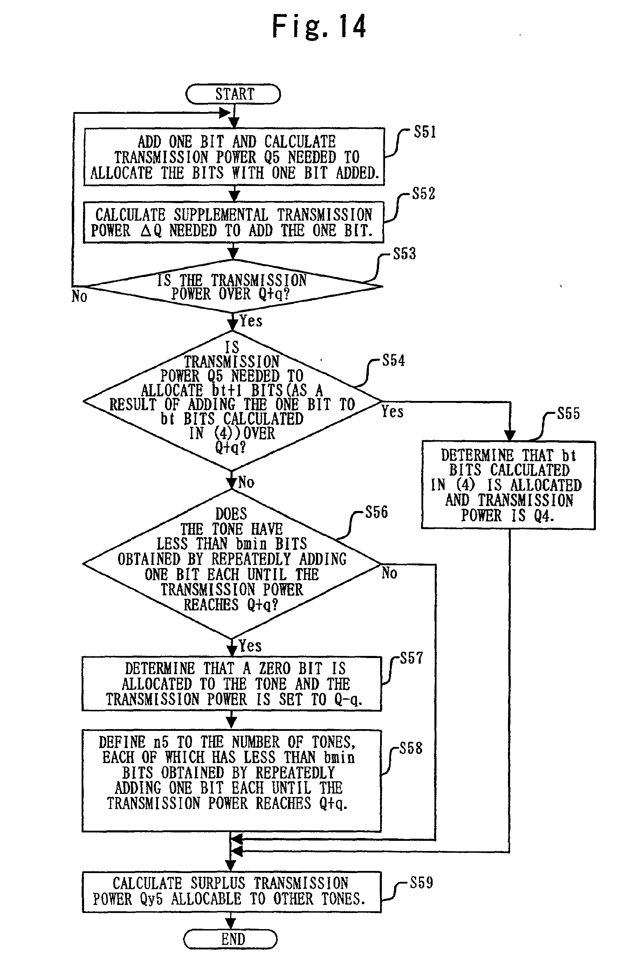

(5) Determination for tones other than those extracted in (1) through (3) above (See Fig. 14):

An amount of supplemental transmission power needed to add one bit (+1) each to the integer number of bits to be allocated to a tone which is obtained by omitting decimals through calculation in (4) above is calculated. A method for calculating the amount of supplemental transmission power of this case will be discussed below with reference to the flow chart of Fig. 14.

(5-1) Calculating the number of bits to be allocated to a tone and an amount of transmission power:

①Calculating transmission power Q5:

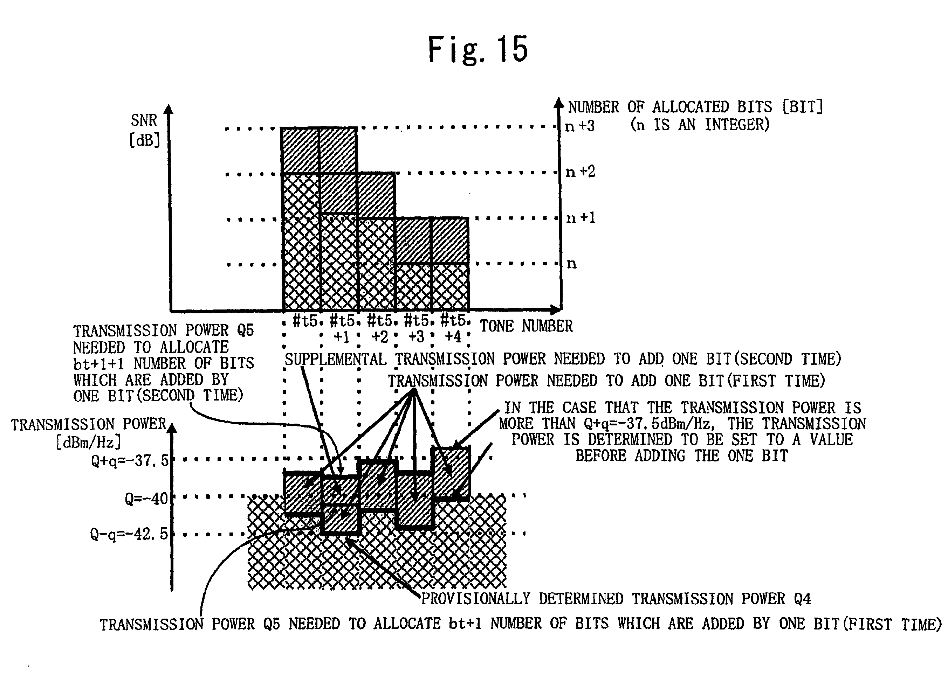

One bit is added (+1) to the integer number of bits which is obtained by omitting decimals in the above (4). Then, the transmission power Q5 which is needed to allocate this one-bit added (+1) number of bits to the tone is calculated (step S51).
As illustrated in Fig. 15, one bit is added (+1) to bt (the integer number of bits obtained by omitting decimals) . The transmission power Q5, an amount of transmission power needed to allocate the one-bit added (+1) number of bits (bt+1) to the tone, is described by an equation (12) in the same manner as that of the equation (10) above.

$$Q5 = 10\log_{10}(2^{bt+1}-1) + Loss[dB] + PSD[dBm/Hz] + \Gamma \tag{12}$$

After obtaining the amount of transmission power needed to allocate the one-bit added number of bits (bt+1) to the tone, one more bit is added (+1) to the one-bit added number of bits. The transmission power Q5 which is needed to allocate this one-more-bit added number of bits (bt+1+1) to the tone is calculated.

②Calculating supplemental transmission power $\Delta Q$:

Supplemental transmission power $\Delta Q$ which is needed to add one bit (+1) to the number of bits is calculated (step S52).
As illustrated in Fig. 15, the supplemental transmission power $\Delta Q$ needed to add one bit (+1) to the number of bits is represented by a difference between the transmission power Q5 which is needed to allocate the one-bit added number of bits (bt+1) and the transmission power Q4 which is needed to allocate the integer number of bt bits obtained by omitting decimals. The supplemental transmission power $\Delta Q$ is described by an equation (13).

$$\Delta Q = Q5 - Q4 \tag{13}$$

In the case of adding further one more bit (+1) to the tone as well, an amount of supplemental transmission power can be calculated by obtaining a difference between an amount of transmission power before adding the further one more bit (+1) and an amount of transmission power after adding the further one more bit to the tone. Thus, the amount of supplemental transmission power can be obtained by repeating a series of the operations discussed in (5-1- ①) and (5-1- ②) until the transmission power Q5 reaches Q+q=-37.5 dBm/Hz (step S53).

(5-2) Determining the number of bits to be allocated to the tone and an amount of transmission power:

①A tone whose transmission power Q5 needed to allocate the number of bits (bt+1) as a result of adding one bit (+1) to bt bits calculated in (4) above is more than Q+q:

As shown in Fig. 15, the transmission power Q5 needed to allocate the one-bit added number of bits (bt+1) to bt bits calculated in (4) above to a tone may be more than Q+q=-37.5 dBm/Hz (when Yes is selected in the step S54). In that case, it is determined that the tone is allocated bt number of bits and transmission power Q4 calculated in (4) above (step S55).

②A tone whose transmission power Q5 needed to allocate the number of bits (bt+1) as a result of adding one bit (+1) to bt number of bits calculated in (4) above is Q+q or less:

The transmission power Q5 needed to allocate the one-bit added (+1) number of bits (bt+1) to bt bits to a tone calculated in (4) above may be Q+q=-37.5 dBm/Hz or less (when No is selected in the step S54). In that case, it is judged whether or not a calculated number of bits to be allocated to the tone by repeatedly adding one bit each until transmission power reaches Q+q is less than bmin (step S56).

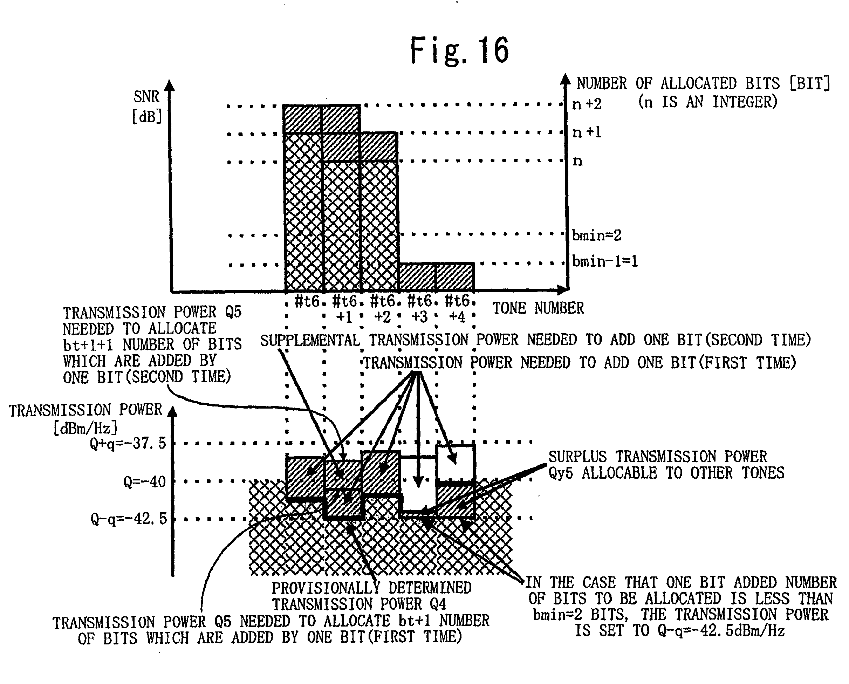

As illustrated in Fig. 16, in the case that a calculated number of bits to be allocated to a tone by repeatedly adding one bit each until transmission power reaches Q+q=-37.5 dBm/Hz is less than bmin=2 bits (when Yes is selected in the step S56), then it is determined that a zero (0) bit is allocated to the tone and the transmission power is set to Q-q=-42.5 dBm/Hz (step S57). The number of tones is defines as n5 if each of the tones has less than two (2) bits calculated as a result of repeatedly adding one bit each until the transmission power reaches Q+q=-37.5 dBm/Hz (step S58).

In the case that a calculated number of bits to be allocated to a tone by repeatedly adding one bit each until the transmission power reaches Q+q=-37.5 dBm/Hz is not less than bmin=2 bits (when No is selected in the step S56), then the tone is subject to processing below (step S59).

(5-3) Calculating surplus transmission power allocable to other tones:

As illustrated in Fig. 16, surplus transmission power Qy5 which is allocable to other tones obtained from the n5 number of tones calculated in the step S58 is described by an equation (14) (step S59).

$$Qy5 = q \times n5 \tag{14}$$

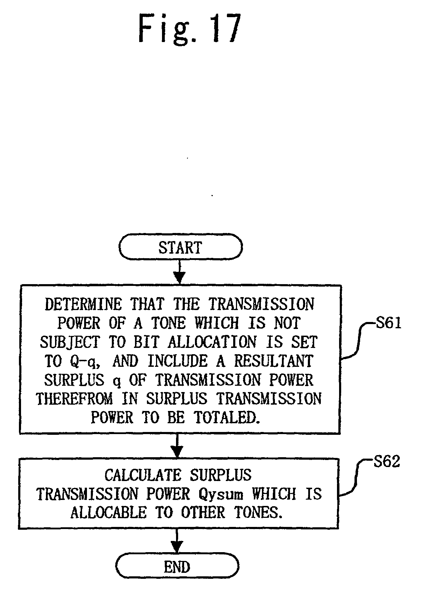

(6) Totaling re-allocable surplus transmission power (See Fig. 17)

Re-allocable amounts of surplus transmission power calculated in (1) through (5) above are totaled. If there is a tone which is not subject to bit allocation, then it is determined that the transmission power to be assigned to the tone is set to Q-q=-42.5 dBm/Hz. Then, surplus transmission power q which is a thereby obtained is also included in the totaling (step S61). Defining the number of tones which are not subject to bit allocation as n6, a totaled amount Qysum of surplus transmission power allocable to other tones is described by an equation (15)(step S62).

$$Qysum = Qy1 + Qy2 + Qy3 + Qy4 + Qy5 + q \times n6 \tag{15}$$

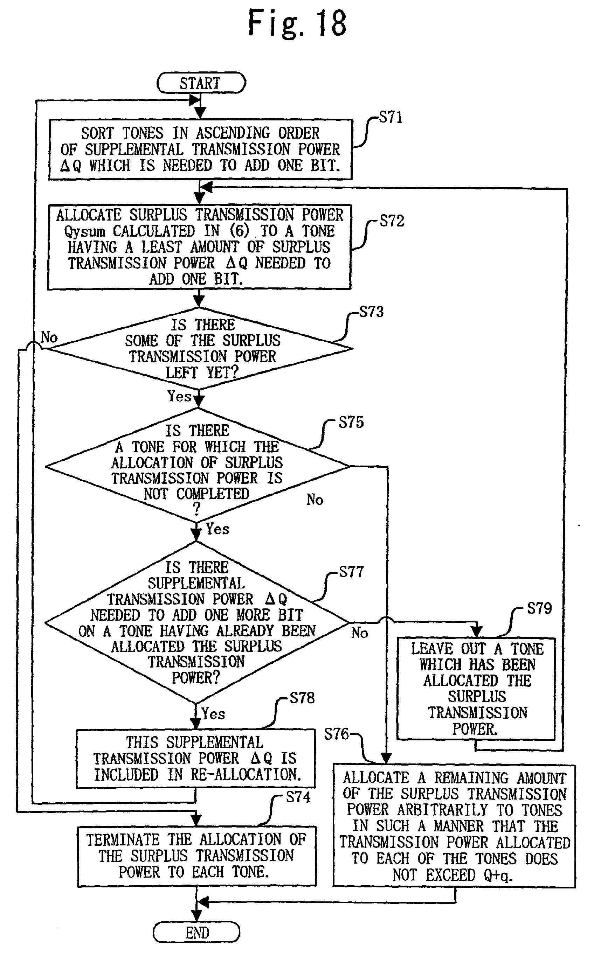

(7) Re-allocating surplus transmission power (See Fig. 18):

The totaled amount of surplus transmission power calcu lated in (6) is allocated to tones in ascending order of the supplemental transmission power ΔQ which is needed to add o ne bit (+1) calculated in (5) above. The number of bits allo cated to the tone increases by one bit (+1), when the tone is re-allocated. In that manner, a tone having a least amount of the supplemental transmission power ΔQ needed to add one bit (+1) receives the surplus transmission power first in or der. Therefore, the re-allocation is made earlier for the t one of higher efficiency, i.e., the tone being capable of ad ding one bit (+1) with a less amount of supplemental transmi ssion power. A method for re-allocating the surplus transmi ssion power is discussed below with reference to the flow ch art of Fig. 18.

Tones are sorted in ascending order of the supplemental transmission power ΔQ needed to add one bit (+1) which is calculated in (5) above (step S71). It is noted that the supplemental transmission power ΔQ referenced here is an amount of supplemental transmission power needed to add one bit (+1) to the integer number of bt bits obtained by omitting decimals.

Thus, the totaled amount Qysum of the surplus transmission power calculated in (6) is allocated to a tone having a least amount of supplemental transmission power Δ Q needed to add one bit (+1) (step S72).

In the case that the surplus transmission power is exhausted (when No is selected in the step S73), then the operation for allocating the surplus transmission power to each tone is terminated (step S74).

In the case that there is some amount of the surplus transmission power being left yet even after allocating the surplus transmission power to all the recipient tones discussed in (5) above (when Yes is selected in the step S73 and No is selected in the step S75), then the remaining amount of the surplus transmission power is re-allocated to arbitrarily selected tones in such a manner that transmission power allocated to each tone does not go beyond Q+q=-37.5 dBm/Hz in total (step S76). The purpose of this re-allocating the surplus transmission power is that the average transmission power Q for all the tone achieves the transmission power Q, and therefore, the number of bits to be allocated to each tone is not increased.

In the case that there is some amount of the surplus transmission power left yet and that there are some tones for which re-allocation is not completed (when Yes is selected in the step S73 and when Yes is selected in the step S75), then it is judged whether or not there is further supplemental transmission power $\Delta Q$ needed to add one more bit (+1) on a tone having been already allocated the surplus transmission power (step S77). In the case that there is the supplemental transmission power $\Delta Q$ needed to add one more bit (+1) on a tone having been already allocated the surplus transmission power (when Yes is selected in the step S77), the supplemental transmission power $\Delta Q$ is included in re-allocation (step S78) of the surplus transmission power. The recipient tones are sorted in ascending order of the supplemental transmission power $\Delta Q$ (step S71). Then, the surplus transmission power calculated in (6) is allocated to a tone having a least amount of the supplemental transmission power $\Delta Q$ needed to add one bit (+1) (step S72). In the case that there is no further supplemental transmission power $\Delta Q$ needed to add one more bit (+1) on a tone having been already allocated the surplus transmission power (when No is selected in the step S77), then the tone having already been allocated the surplus transmission power is left out from the recipients of the surplus transmission power(step S79). The surplus transmission power calculated in (6) is allocated to a tone having a least amount of the supplemental transmission power $\Delta Q$ needed to add one bit (+1) (step S71). A series of the operations above are repeated.

As aforementioned, the communication system for allocating data to a plurality of tones, and for transmitting the data, is provided with the transmission power calculation unit for calculating transmission power needed to transmit a certain integer number of bits for each of the plurality of tones, and the transmission power re-allocation unit for re-allocating transmission power to the each of the plurality of tones so that average transmission power of transmission power to be allocated to the each of the plurality of tones is leveled, based upon a calculated result from the transmission power calculation unit. This allows transmission power to be allocated to tones in an efficient manner, thereby improving a transmission efficiency per unit of transmission power.

Further, according to the first embodiment, the descriptions were made assuming that the average transmission power is set to Q and that transmission power can change within the range of $Q \pm q = -40 \pm 2.5$ dBm/Hz. However, the values of Q and q are not limited to these values, and therefore, the same effect may alternatively be attained with different values. Still alternatively, the same effect may be achieved without such limitations of transmission power when the average transmission power is set to Q.

Furthermore, according to the first embodiment, the descriptions were made assuming that the maximum number of allocable bits is bmax=15 bits and the minimum number of allocable bits is bmin=2 bits. However, the values of bmax and bmin are not limited to these values, and therefore, the same effect may alternatively be attained with different values. Still alternatively, no limitation may be applied to either or both of the values of bmax and bmin so as to achieve the same effect as well.

Still further, according to the first embodiment, the descriptions were made assuming that a series of the operations performed in (5-1- ①) and (5-1- ②) are repeated until the transmission power Q5 reaches Q+q= - 37.5 dBm/Hz. Alternatively, however, the same effect may be attained not by repeating the series of the operations performed in (5-1- ①) and (5 -1- ②) by adopting transmission power as a parameter, but by repeating the series of the operations performed in (5-1- ①) and (5-1- ②) by adopting the frequency of repeating the operations as a parameter.

Still further, according to the first embodiment, the discussions were made of the communication system with the transmitting unit or transmitter such as a communication modem or the like of the ADSL central office end device or the ADSL remote terminal end device for performing bit allocation based upon the DMT system according to one embodiment of the present invention. However, it is not limited to use the communication system discussed in the first embodiment. The same effect may alternatively be obtained with any type of the communication system which transmits data being allocated to a plurality of tones.

Industrial Applicability

As aforementioned, the communication system for allocating data to a plurality of tones, and for transmitting the data, is provided with the transmission power calculation unit for calculating transmission power needed to transmit a certain integer number of bits for each of the plurality of tones, and the transmission power re-allocation unit for re-allocating transmission power to the each of the plurality of tones so that average transmission power of transmission power to be allocated to the each of the plurality of tones is leveled based upon a calculated result from the transmission power calculation unit. This allows an efficient allocation of transmission power to tones, thereby improving a transmission efficiency per unit of transmission power.

Further, the transmission power re-allocation unit re-allocates the transmission power to each of the plurality of tones to set a transmission value within a certain range so that the average transmission power of the transmission power to be allocated to the each of the plurality of tones is leveled. This allows an efficient allocation of transmission power to the tones, thereby improving a transmission efficiently per unit of transmission power.

Furthermore, the transmission power calculation unit, in the case that a number of allocable bits to the each of the plurality of tones is limited, calculates the transmission power needed to transmit an integer number of bits within a limit. This allows an efficient allocation of transmission power to each tone, thereby improving a transmission efficiently per unit of transmission power.

Still further, the transmission power calculation unit calculates supplemental transmission power which is needed to add one bit to the certain number of bits, for the each of the plurality of tones, and the transmission power re-allocation unit re-allocates the transmission power to the each of the plurality of tones in ascending order of the supplemental transmission power. This allows an efficient allocation of transmission power to each tone, thereby improving a transmission efficiency per unit of transmission power.

In addition to that, the communication method for allocating data to a plurality of tones, and for transmitting the data includes, in the case that a number of allocable bits to each of the plurality of tones is limited, calculating transmission power needed to transmit an integer number of bits within a limit, and, based upon a calculation result, re-allocating the transmission power to the each of the plurality of tones to set a transmission power value within a certain range so that average transmission power of the transmission power to be allocated to each of the plurality of tones is leveled. This allows an efficient allocation of transmission power to each tone, thereby improving a transmission efficiency per unit of transmission power.

Further, calculating transmission power needed to transmit an integer number of bits includes setting the transmission power of a minimum value within the certain range to a tone whose number of allocable bits is more than a maximum integer number of bits within the limit in the case that the transmission power of the minimum value within the certain range is set, and re-allocating the transmission power to the each of the plurality of tones includes re-allocating to other tones of the plurality of tones surplus transmission power which is surplus to the average transmission power obtained by the transmission power being set to the minimum value. This allows an efficient allocation of transmission power to each tone, thereby improving a transmission efficiency per unit of transmission power.

Furthermore, calculating transmission power needed to transmit an integer number of bits includes setting the transmission power of a minimum value within the certain range to a tone whose number of allocable bits is less than a minimum integer number of bits within the limit in the case that the transmission power of a maximum value within the certain range is set, and re-allocating the transmission power to the each of the plurality of tones includes re-allocating to other tones of the plurality of tones surplus transmission power which is surplus to the average transmission power obtained by the transmission power being set to the minimum value. This allows an efficient allocation of transmission power to each tone, thereby improving a transmission efficiency per unit of transmission power.

Still further, calculating transmission power needed to transmit an integer number of bits includes setting the transmission power of a minimum value within the certain range to a tone whose number of allocable bits is a zero bit in the case that the transmission power of a maximum value within the certain range is set, and re-allocating the transmission power to the each of the plurality of tones includes re-allocating to other tones of the plurality of tones surplus transmission power which is surplus to the average transmission power obtained by the transmission power being set to the minimum values. This allows an efficient allocation of transmission power to each tone, thereby improving a transmission efficiency per unit of transmission power.

Still further, calculating transmission power needed to transmit an integer number of bits includes setting the transmission power of a minimum value within the certain range to a tone whose is not subject to a bit allocation, and re-allocating the transmission power to the each of the plurality of tones includes re-allocating to other tones of the plurality of tones surplus transmission power which is surplus to the average transmission power obtained by the transmission power being set to the minimum value. This allows an efficient allocation of transmission power to each tone, thereby improving a transmission efficiency per unit of transmission power.

Still further, calculating transmission power needed to transmit an integer number of bits includes calculating supplemental transmission power which is needed to add one bit each to the certain number of bits for the each of the plurality of tones until the transmission power reaches the maximum value within the certain range, and re-allocating the transmission power to the each of the plurality of tones includes re-allocating the surplus transmission power to the other tones of the plurality of tones in ascending order of the supplemental transmission power which is needed to add one bit each to the certain number of bits. This allows an efficient allocation of transmission power to each tone, thereby improving a transmission efficiency per unit of transmission power.

## Claims

1. A communication system for allocating data to a plurality of tones, and for transmitting the data, the communication system comprises:

a transmission power calculation unit for calculating transmission power needed to transmit a certain integer number of bits, for each of the plurality of tones; and

a transmission power re-allocation unit for re-allocating the transmission power to the each of the plurality of tones so that average transmission power of the transmission power to be allocated to the each of the plurality of tones is leveled, based upon a calculation result calculated by the transmission power calculation unit.

2. The communication system of claim 1, wherein the transmission power re-allocation unit re-allocates the transmission power to the each of the plurality of tones to set a transmission power value within a certain range so that the average transmission power of the transmission power to be allocated to the each of the plurality of tones is leveled.

3. The communication system of claim 1, wherein the transmission power calculation unit, in a case that a number of allocable bits to the each of the plurality of tones is limited, calculates the transmission power needed to transmit an integer number of bits within a limit.

4. The communication system of claim 1, wherein the transmission power calculation unit calculates supplemental transmission power which is needed to add one bit to the certain number of bits, for the each of the plurality of tones, and

wherein the transmission power re-allocation unit re-allocates the transmission power to the each of the plurality of tones in ascending order of the supplemental transmission power.

5. A communication method for allocating data to a plurality of tones, and for transmitting the data, the communication method comprises:

in a case that a number of allocable bits to each of the plurality of tones is limited, calculating transmission power needed to transmit an integer number of bits within a limit; and

based upon a calculation result, re-allocating the transmission power to the each of the plurality of tones to set a transmission power value within a certain range so that average transmission power of the transmission power to be allocated to each of the plurality of tones is leveled.

6. , The communication method of claim 5, wherein calculating transmission power needed to transmit an integer number of bits includes setting the transmission power of a minimum value within the certain range to a tone whose number of allocable bits is more than a maximum integer number of bits within the limit in a case that the transmission power of the minimum value within the certain range is set; and

wherein re-allocating the transmission power to the each of the plurality of tones includes re-allocating to other tones of the plurality of tones surplus transmission power which is surplus to the average transmission power obtained by the transmission power being set to the minimum value.

7. The communication method of claim 5, wherein calculating transmission power needed to transmit an integer number of bits includes setting the transmission power of a minimum value within the certain range to a tone whose number of allocable bits is less than a minimum integer number of bits within the limit in a case that the transmission power of a maximum value within the certain range is set; and

wherein re-allocating the transmission power to the each of the plurality of tones includes re-allocating to other tones of the plurality of tones surplus transmission power which is surplus to the average transmission power obtained by the transmission power being set to the minimum value.

8. The communication method of claim 5, wherein calculating transmission power needed to transmit an integer number of bits includes setting the transmission power of a minimum value within the certain range to a tone whose number of allocable bits is a zero bit in a case that the transmission power of a maximum value within the certain range is set; and

wherein re-allocating the transmission power to the each of the plurality of tones includes re-allocating to other tones of the plurality of tones surplus transmission power which is surplus to the average transmission power obtained by the transmission power being set to the minimum value.

9. The communication method of claim 5, wherein calculating transmission power needed to transmit an integer number of bits includes setting the transmission power of a minimum value within the certain range to a tone whose is not subject to a bit allocation; and

wherein re-allocating the transmission power to the each of the plurality of tones includes re-allocating to other tones of the plurality of tones surplus transmission power which is surplus to the average transmission power obtained by the transmission power being set to the minimum value.

10. The communication method of claim 6, wherein calculating transmission power needed to transmit an integer number of bits includes calculating supplemental transmission power which is needed to add one bit each to the certain number of bits, for the each of the plurality of tones, until the transmission power reaches the maximum value within the certain range; and

wherein re-allocating the transmission power to the each of the plurality of tones includes re-allocating the surplus transmission power to the other tones of the plurality of tones in ascending order of the supplemental transmission power which is needed to add one bit each to the certain number of bits.

11. The communication method of claim 7, wherein calculating transmission power needed to transmit an integer number of bits includes calculating supplemental transmission power which is needed to add one bit each to the certain number of bits, for the each of the plurality of tones, until the transmission power reaches the maximum value within the certain range; and

wherein re-allocating the transmission power to the each of the plurality of tones includes re-allocating the surplus transmission power to the other tones of the plurality of tones in ascending order of the supplemental transmission power which is needed to add one bit each to the certain number of bits.

12. The communication method of claim 8, wherein calculating transmission power needed to transmit an integer number of bits includes calculating supplemental transmission power which is needed to add one bit each to the certain number of bits, for the each of the plurality of tones, until the transmission power reaches the maximum value within the certain range; and

wherein re-allocating the transmission power to the each of the plurality of tones includes re-allocating the surplus transmission power to the other tones of the plurality of tones in ascending order of the supplemental transmission power which is needed to add one bit each to the certain number of bits.

13. The communication method of claim 9, wherein calculating transmission power needed to transmit an integer number of bits includes calculating supplemental transmission power which is needed to add one bit each to the certain number of bits, for the each of the plurality of tones, until the transmission power reaches the maximum value within the certain range; and

wherein re-allocating the transmission power to the each of the plurality of tones includes re-allocating the surplus transmission power to the other tones of the plurality of tones in ascending order of the supplemental transmission power which is needed to add one bit each to the certain number of bits.

# Fig. 1

Fig. 1

Scram & FEC ~4    crc ~2    Mux/ Sync Control ~1    TRANSMISSION DATA

Interleave ~6    Scram & FEC ~5    crc ~3

ELECTRIC POWER COORDINATION UNIT ~9    Rate-convertor ~7

Input Parallel/ Serial Buffer ~11    IDFT ~10

TRANSMISSION POWER RE-ALLOCATION UNIT    TRANSMISSION POWER CALCULATION UNIT

92    91    Rate-convertor ~8

Analog Processing And DAC ~12

EP 1 107 493 A1

# Fig. 2

```
              ┌─────────────┐
              │    START    │
              └─────────────┘
                     │
                     ▼
    ┌───────────────────────────────────┐
    │  EXTRACT A TONE WHICH HAS MORE     │  ──S11
    │  THAN bmax BITS TO BE ALLOCATED    │
    │  IN THE CASE THAT TRANSIMISSION    │
    │  POWER IS SET TO Q-q.              │
    └───────────────────────────────────┘
                     │
                     ▼
    ┌───────────────────────────────────┐
    │  DETERMINE FOR AN EXTRACTED        │  ──S12
    │  TONE THAT bmax BITS IS ALLOCATED  │
    │  AND THE TRANSMISSION POWER IS     │
    │  SET TO Q-q.                       │
    └───────────────────────────────────┘
                     │
                     ▼
    ┌───────────────────────────────────┐
    │      CALCULATE SURPLUS             │  ──S13
    │  TRANSMISSION POWER Qy1 WHICH IS   │
    │  ALLOCABLE TO OTHER TONES.         │
    └───────────────────────────────────┘
                     │
                     ▼
              ┌─────────────┐
              │     END     │
              └─────────────┘
```

# Fig. 3

SNR [dB]

SNR IN THE CASE OF Q-q=-42.5dBm/Hz

NUMBER OF ALLOCATED BITS [BIT]

bmax=15

#t1   #t1   #t1   #t1   #t1   #t1   #t1   TONE NUMBER
      +1    +2    +3    +4    +5    +6

EP 1 107 493 A1

# Fig. 4

SNR
[dB]

SNR IN THE CASE OF
Q−q=−42.5dBm/Hz

NUMBER OF
ALLOCATED BITS
[BIT]

bmax=15

#t1    #t1    #t1    #t1    #t1    #t1    #t1    TONE NUMBER
       +1     +2     +3     +4     +5     +6

TRANSMISSION
POWER
[dBm/Hz]

Q+q=−37.5

Q=−40

Q−q=−42.5

SURPLUS TRANSMISSION POWER Qy1 ALLOCABLE TO OTHER TONES

EP 1 107 493 A1

# Fig. 5

```
            ┌──────────────┐
            │    START     │
            └──────┬───────┘
                   │
                   ▼
   ┌─────────────────────────────┐
   │  EXTRACT A TONE WHICH HAS LESS │─── S21
   │  THAN bmin BITS TO BE ALLOCATED │
   │  IN THE CASE THAT TRANSIMISSION │
   │    POWER IS SET TO Q-q.         │
   └──────────────┬─────────────────┘
                  │
                  ▼
   ┌─────────────────────────────┐
   │   DETERMINE FOR AN EXTRACTED   │─── S22
   │  TONE THAT bmax BITS IS ALLOCATED│
   │  AND THE TRANSMISSION POWER IS  │
   │        SET TO Q-q.             │
   └──────────────┬─────────────────┘
                  │
                  ▼
   ┌─────────────────────────────┐
   │    CALCULATE SURPLUS           │─── S23
   │ TRANSMISSION POWER Qy2 WHICH IS │
   │   ALLOCABLE TO OTHER TONES.     │
   └──────────────┬─────────────────┘
                  │
                  ▼
            ┌──────────────┐
            │     END      │
            └──────────────┘
```

# Fig. 6

SNR [dB]

SNR IN THE CASE OF
Q-q=-42.5dBm/Hz

NUMBER OF
ALLOCATED BITS
[BIT]

bmin=2

#t2   #t2   #t2         #t2   #t2   #t2   TONE NUMBER
      +1    +2    #t2   +4    +5    +6
                  +3

EP 1 107 493 A1

# Fig. 7

SNR [dB]

SNR IN THE CASE OF Q+q=-37.5dBm/Hz

SNR IN THE CASE OF Q-q=-42.5dBm/Hz

NUMBER OF ALLOCATED BITS [BIT]

bmin=2

TONE NUMBER

#t2  #t2+1  #t2+2  #t2+3  #t2+4  #t2+5  #t2+6

TRANSMISSION POWER [dBm/Hz]

Q+q=-37.5

Q=-40

Q-q=-42.5

SURPLUS TRANSMISSION POWER Qy2 ALLOCABLE TO OTHER TONE

EP 1 107 493 A1

# Fig. 8

```
                    ┌──────────────┐
                    │    START     │
                    └──────────────┘
                            │
                            ▼
        ┌───────────────────────────────────┐
        │  EXTRACT A TONE WHICH HAS MORE     │╮  S31
        │  THAN bmax BITS TO BE ALLOCATED    │
        │  IN THE CASE THAT TRANSIMISSION    │
        │  POWER IS SET TO Q.                │
        └───────────────────────────────────┘
                            │
                            ▼
        ┌───────────────────────────────────┐
        │     CALCULATE MINIMUM REQUIRED     │╮  S32
        │       TRANSMISSION POWER FOR       │
        │   ALLOCATING bmax NUMBER OF BITS   │
        │        TO AN EXTRACTED TONE        │
        └───────────────────────────────────┘
                            │
                            ▼
        ┌───────────────────────────────────┐
        │   CALCULATE THE NUMBER OF TONES    │
        │      HAVING MINIMUM REQUIRED       │
        │   TRANSMISSION POWER WHICH IS      │╮  S33
        │   LESS THAN Q-q, AND DETERMINE     │
        │  FOR SUCH TONE THAT bmax BITS IS   │
        │  ALLOCATED AND THE TRANSMISSION    │
        │     POWER IS SET TO Q-q.           │
        └───────────────────────────────────┘
                            │
                            ▼
        ┌───────────────────────────────────┐
        │ DETERMINE THAT A TONE OTHER THAN   │╮  S34
        │  THOSE IS ALLOCATED bmax NUMBER    │
        │   OF BITS AND THE TRANSMISSION     │
        │  POWER IS SET TO MINIMUM REQUIRED  │
        │    TRANSMISSION POWER Q3 FOR       │
        │  ALLOCATING bmax NUMBER OF BITS    │
        └───────────────────────────────────┘
                            │
                            ▼
        ┌───────────────────────────────────┐
        │       CALCULATE SURPLUS            │╮  S35
        │  TRANSMISSION POWER Qy3 WHICH IS   │
        │    ALLOCABLE TO OTHER TONES.       │
        └───────────────────────────────────┘
                            │
                            ▼
                    ┌──────────────┐
                    │     END      │
                    └──────────────┘
```

# Fig. 9

# Fig. 10

SNR [dB]

SNR IN THE CASE OF AN AMOUNT OF TRANSMISSION POWER NEEDED TO TRANSMIT bmax=15 BITS

SNR IN THE CASE OF Q-q=-42.5dBm/Hz

NUMBER OF ALLOCATED BITS [BIT]

SNR IN THE CASE OF Q=-40dBm/Hz

bmax=15

#t3   #t3+1   #t3+2   #t3+3   #t3+4   #t3+5   #t3+6   TONE NUMBER

TRANSMISSION POWER [dBm/Hz]

MINIMUM REQUIRED TRANSMISSION POWER Q3 FOR TRANSMITTING bmax=15 BITS

Q+q=-37.5

SURPLUS TRANSMISSION POWER Qy3 ALLOCABLE TO OTHER TONES

Q=-40

Q-q=-42.5

WITH A TONE WHOSE TRANSMISSION POWER IS LESS THAN Q-q=-42.5dBm/Hz, THE TRANSMISSION POWER IS DETERMINED TO BE Q-q=-42.5dBm/Hz.

# Fig. 11

```
                    ┌─────────────┐
                    │    START    │
                    └──────┬──────┘
                           │
                           ▼
        ┌──────────────────────────────────┐
        │ CALCULATE THE NUMBER OF BITS TO   │ ─ S41
        │ BE ALLOCATED TO A TONE BY         │
        │ OMITTING DECIMALS IN THE CASE     │
        │ OF TRANSMISSION POWER BEING       │
        │ SET TO Q.                         │
        └──────────────────┬───────────────┘
                           │
                           ▼
        ┌──────────────────────────────────┐
        │ CALCULATE MINIMUM REQUIRED        │ ─ S42
        │ TRANSMISSION POWER Q4 FOR         │
        │ ALLOCATING AN INTEGER NUMBER      │
        │ OF BITS OBTAINED BY OMITTING      │
        │ DECIMALS                          │
        └──────────────────┬───────────────┘
                           │
                           ▼
                         ╱╲  S43
                        ╱  ╲
                       ╱ IS ╲
                      ╱MINIMUM╲
                     ╱REQUIRED ╲
              ┌─────╱TRANSMISSION╲──── No ────┐
              │     ╲POWER FOR    ╱            │
              │      ╲TRANSMITTING╱            │
              │       ╲THE TONE  ╱             │
              │        ╲LESS THAN╱             │
              │         ╲ Q-q?  ╱              │
              │          ╲    ╱                │
              │ Yes  S44  ╲  ╱                 │  S45
              ▼                                ▼
  ┌─────────────────────────┐    ┌──────────────────────────────┐
  │ CALCULATE THE NUMBER OF │    │ PROVISIONALLY DETERMINE THAT │
  │ SUCH TONES, AND         │    │ THE INTEGER NUMBER OF BITS IS│
  │ PROVISIONALLY DETERMINE │    │ ALLOCATED TO THE TONE AND THE│
  │ THAT THE INTEGER NUMBER │    │ TRANSMISSION POWER IS SET TO │
  │ OF BITS IS ALLOCATED    │    │ MINIMUM REQUIRED TRANSMISSION│
  │ TO EACH OF THE TONES    │    │ POWER Q4 FOR TRANSMITTING    │
  │ AND THE TRANSMISSION    │    │ THE INTEGER NUMBER OF BITS.  │
  │ POWER IS SET TO Q-q.    │    └──────────────┬───────────────┘
  └────────────┬────────────┘                   │
               │                                 │
               ▼◄────────────────────────────────┘
  ┌─────────────────────────────┐
  │ CALCULATE SURPLUS           │ ─ S46
  │ TRANSMISSION POWER Qy4      │
  │ WHICH IS ALLOCABLE TO       │
  │ OTHER TONES.                │
  └────────────┬────────────────┘
               │
               ▼
        ┌─────────────┐
        │     END     │
        └─────────────┘
```

# Fig. 12

# Fig. 13

SNR IN THE CASE OF MINIMUM REQUIRED TRANSMISSION POWER FOR TRANSMITTING AN INTEGER NUMBER OF BITS

SNR IN THE CASE OF $Q-q=-42.5$dBm/Hz

SNR IN THE CASE OF $Q=-40$dBm/Hz

NUMBER OF ALLOCATED BITS [BIT] (n IS AN INTEGER)

SNR [dB]

$n+3$
$n+2$
$n+1$
$n$

#t4   #t4+1   #t4+2   #t4+3   #t4+4   TONE NUMBER

TRANSMISSION POWER [dBm/Hz]

MINIMUM REQUIRED TRANSMISSION POWER Q4 FOR TRANSMITTING AN INTEGER NUMBER OF BITS

SURPLUS TRANSMISSION POWER Qy4 ALLOCABLE TO OTHER TONES

$Q+q=-37.5$

$Q=-40$

$Q-q=-42.5$

WITH A TONE WHOSE TRANSMISSION POWER IS LESS THAN $Q-q=-42.5$dBm/Hz, THE TRANSMISSION POWER IS PROVISIONALLY DETERMINED TO BE $Q-q=-42.5$dBm/Hz

EP 1 107 493 A1

# Fig. 14

```
                    START

         ┌──────────────────────────────────┐  S51
         │  ADD ONE BIT AND CALCULATE        │
         │  TRANSMISSION POWER Q5 NEEDED TO   │
         │  ALLOCATE THE BITS WITH ONE BIT ADDED. │
         └──────────────────────────────────┘

         ┌──────────────────────────────────┐  S52
         │  CALCULATE SUPPLEMENTAL TRANSMISSION │
         │  POWER ΔQ NEEDED TO ADD THE ONE BIT. │
         └──────────────────────────────────┘

                                              S53
              IS THE TRANSMISSION
    No        POWER OVER Q+q?

                    │Yes

                      IS
                 TRANSMISSION            S54
                 POWER Q5 NEEDED TO
               ALLOCATE bt+1 BITS (AS A
              RESULT OF ADDING THE ONE BIT TO
                bt BITS CALCULATED          Yes
                   IN (4)) OVER
                      Q+q?

                    │No
```

$Q5$ needed to allocate $bt+1$ bits, $bt$ bits.

```
         ┌──────────────────────────────────┐  S55
         │  DETERMINE THAT bt                 │
         │  BITS CALCULATED                   │
         │  IN (4) IS ALLOCATED               │
         │  AND TRANSMISSION                  │
         │  POWER IS Q4.                      │
         └──────────────────────────────────┘

                    DOES                    S56
                THE TONE HAVE
              LESS THAN bmin BITS
           OBTAINED BY REPEATEDLY ADDING
              ONE BIT EACH UNTIL THE          No
              TRANSMISSION POWER
                REACHES Q+q?

                    │Yes

         ┌──────────────────────────────────┐  S57
         │  DETERMINE THAT A ZERO BIT IS      │
         │  ALLOCATED TO THE TONE AND THE     │
         │  TRANSMISSION POWER IS SET TO Q-q. │
         └──────────────────────────────────┘

         ┌──────────────────────────────────┐  S58
         │  DEFINE n5 TO THE NUMBER OF TONES, │
         │  EACH OF WHICH HAS LESS THAN bmin  │
         │  BITS OBTAINED BY REPEATEDLY       │
         │  ADDING ONE BIT EACH UNTIL THE     │
         │  TRANSMISSION POWER REACHES Q+q.   │
         └──────────────────────────────────┘

         ┌──────────────────────────────────┐  S59
         │  CALCULATE SURPLUS TRANSMISSION    │
         │  POWER Qy5 ALLOCABLE TO OTHER TONES. │
         └──────────────────────────────────┘

                    END
```

# Fig. 15

NUMBER OF ALLOCATED BITS [BIT]

(n IS AN INTEGER)

SNR [dB]

n+3

n+2

n+1

n

#t5. #t5. #t5. #t5. #t5.
 +1  +2  +3  +4

TONE NUMBER

TRANSMISSION POWER Q5 NEEDED TO ALLOCATE bt+1+1 NUMBER OF BITS WHICH ARE ADDED BY ONE BIT(SECOND TIME)

SUPPLEMENTAL TRANSMISSION POWER NEEDED TO ADD ONE BIT(SECOND TIME)

TRANSMISSION POWER NEEDED TO ADD ONE BIT(FIRST TIME)

IN THE CASE THAT THE TRANSMISSION POWER IS MORE THAN Q+q=-37.5dBm/Hz, THE TRANSMISSION POWER IS DETERMINED TO BE SET TO A VALUE BEFORE ADDING THE ONE BIT

TRANSMISSION POWER [dBm/Hz]

Q+q=-37.5

Q=-40

Q-q=-42.5

PROVISIONALLY DETERMINED TRANSMISSION POWER Q4

TRANSMISSION POWER Q5 NEEDED TO ALLOCATE bt+1 NUMBER OF BITS WHICH ARE ADDED BY ONE BIT(FIRST TIME)

EP 1 107 493 A1

# Fig. 16

NUMBER OF ALLOCATED BITS [BIT]
(n IS AN INTEGER)

SNR [dB]

n+2

n+1

n

bmin=2

bmin-1=1

TONE NUMBER

TRANSMISSION POWER Q5 NEEDED TO ALLOCATE bt+1+1 NUMBER OF BITS WHICH ARE ADDED BY ONE BIT(SECOND TIME)

SUPPLEMENTAL TRANSMISSION POWER NEEDED TO ADD ONE BIT(SECOND TIME)

TRANSMISSION POWER NEEDED TO ADD ONE BIT(FIRST TIME)

TRANSMISSION POWER [dBm/Hz]

$Q+q=-37.5$

$Q=-40$

$Q-q=-42.5$

SURPLUS TRANSMISSION POWER Qy5 ALLOCABLE TO OTHER TONES

PROVISIONALLY DETERMINED TRANSMISSION POWER Q4

TRANSMISSION POWER Q5 NEEDED TO ALLOCATE bt+1 NUMBER OF BITS WHICH ARE ADDED BY ONE BIT(FIRST TIME)

IN THE CASE THAT ONE BIT ADDED NUMBER OF BITS TO BE ALLOCATED IS LESS THAN bmin=2 BITS, THE TRANSMISSION POWER IS SET TO $Q-q=-42.5$dBm/Hz

# Fig. 17

```
        ┌──────────────────┐
        │      START        │
        └──────────────────┘
                 │
                 ▼
┌─────────────────────────────────────┐
│  DETERMINE THAT THE TRANSMISSION     │
│  POWER OF A TONE WHICH IS NOT        │      ⌐S61
│  SUBJECT TO BIT ALLOCATION IS SET    │
│  TO Q-q, AND INCLUDE A RESULTANT     │
│  SURPLUS q OF TRANSMISSION POWER     │
│  THEREFROM IN SURPLUS TRANSMISSION   │
│  POWER TO BE TOTALED.                │
└─────────────────────────────────────┘
                 │
                 ▼
┌─────────────────────────────────────┐
│       CALCULATE SURPLUS              │      ⌐S62
│  TRANSMISSION POWER Qysum WHICH IS   │
│  ALLOCABLE TO OTHER TONES.           │
└─────────────────────────────────────┘
                 │
                 ▼
        ┌──────────────────┐
        │       END         │
        └──────────────────┘
```

# Fig. 18

```
                    ( START )
                        │
                        ▼
        ┌─────────────────────────────────┐
        │ SORT TONES IN ASCENDING ORDER   │ ─── S71
        │ OF SUPPLEMENTAL TRANSMISSION    │
        │ POWER ΔQ WHICH IS NEEDED TO     │
        │ ADD ONE BIT.                    │
        └─────────────────────────────────┘
                        │
                        ▼
        ┌─────────────────────────────────┐
        │ ALLOCATE SURPLUS TRANSMISSION   │ ─── S72
        │ POWER Qsum CALCULATED IN (6)    │
        │ TO A TONE HAVING A LEAST        │
        │ AMOUNT OF SURPLUS TRANSMISSION  │
        │ POWER ΔQ NEEDED TO ADD ONE BIT. │
        └─────────────────────────────────┘
                        │
                        ▼
                  IS THERE                  ─── S73
              SOME OF THE SURPLUS    ◄── No
              TRANSMISSION POWER
                  LEFT YET?
                        │ Yes
                        ▼
                  IS THERE                  ─── S75
              A TONE FOR WHICH THE
              ALLOCATION OF SURPLUS  ── No ──┐
              TRANSMISSION POWER IS
              NOT COMPLETED ?
                        │ Yes
                        ▼
                  IS THERE                  ─── S77
              SUPPLEMENTAL
              TRANSMISSION POWER ΔQ
              NEEDED TO ADD ONE MORE  ── No ──┐
              BIT ON A TONE HAVING                 ┌──────────────────┐
              ALREADY BEEN ALLOCATED              │ LEAVE OUT A TONE │ ─── S79
              THE SURPLUS                          │ WHICH HAS BEEN   │
              TRANSMISSION POWER?                  │ ALLOCATED THE    │
                        │ Yes                       │ SURPLUS          │
                        ▼                            │ TRANSMISSION     │
        ┌─────────────────────────────┐            │ POWER.           │
        │ THIS SUPPLEMENTAL           │ ─── S78    └──────────────────┘
        │ TRANSMISSION POWER ΔQ IS    │
        │ INCLUDED IN RE-ALLOCATION.  │      S76─┐
        └─────────────────────────────┘   ┌──────────────────────────────┐
                        │                 │ ALLOCATE A REMAINING AMOUNT  │
                        ▼                 │ OF THE SURPLUS TRANSMISSION  │
        ┌─────────────────────────────┐  │ POWER ARBITRARILY TO TONES   │
        │ TERMINATE THE ALLOCATION    │  │ IN SUCH A MANNER THAT THE    │
        │ OF THE SURPLUS TRANSMISSION │  │ TRANSMISSION POWER ALLOCATED │
        │ POWER TO EACH TONE.         │  │ TO EACH OF THE TONES DOES    │
        └─────────────────────────────┘  │ NOT EXCEED Q+q.              │
                 ─── S74                   └──────────────────────────────┘
                        │
                        ▼
                    ( END )
```

# Fig. 19

SNR [dB]

SNR COURVE

ALLOCATED NUMBER OF BITS

NUMBER OF ALLOCATED BITS [BIT]
(n IS AN INTEGER)

n+4

n+3

n+2

n+1

n

#t   #t+1   #t+2   #t+3   #t+4   #t+5   #t+6   #t+7   #t+8   #t+9   TONE NUMBER

TRANSMISSION POWER [dBm/Hz]

WORKING TRANSMISSION POWER

MINIMUM REQUIRED TRANSMISSION POWER

EP 1 107 493 A1

<div align="center">

**INTERNATIONAL SEARCH REPORT**

</div>

| International application No. |
| --- |
| PCT/JP00/03433 |

**A. CLASSIFICATION OF SUBJECT MATTER**
    Int.Cl⁷    H04J11/00

According to International Patent Classification (IPC) or to both national classification and IPC

**B. FIELDS SEARCHED**

Minimum documentation searched (classification system followed by classification symbols)
    Int.Cl⁷    H04J11/00

Documentation searched other than minimum documentation to the extent that such documents are included in the fields searched
    Jitsuyo Shinan Koho          1926-2000
    Kokai Jitsuyo Shinan Koho    1971-2000

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| E,X | JP, 11-317723, A (Motorola Inc.),<br>16 November, 1999 (16.11.99),<br>page 3, right column, lines 16 to 41; page 4, right column,<br>line 42 to page 5, left column, line 15<br>& EP, 930752, A2 | 1,3 |
| E,A |  | 2,4-13 |
| A | JP, 8-307385, A (Samsung Electron Co., Ltd.),<br>22 November, 1996 (22.11.96),<br>page 7, left column, lines 11 to 26; page 7, left column,<br>line 50 to right column, line 14<br>& US, 5832387, A    & GB, 2300546, B<br>& KR, 155818, B1 | 1-13 |
| A | JP, 10-155031, A (Motorola Inc.),<br>09 June, 1998 (09.06.98),<br>Fig. 2<br>& EP, 812087, A2    & US, 5852633, A | 1-13 |
| A | JP, 9-51328, A (Samsung Electron Co., Ltd.),<br>18 February, 1997 (18.02.97),<br>Fig. 1 | 1-13 |

☒ Further documents are listed in the continuation of Box C.        ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 August, 2000 (22.08.00) | 05 September, 2000 (05.09.00) |

| Name and mailing address of the ISA/<br>    Japanese Patent Office | Authorized officer |
| --- | --- |
| Facsimile No. | Telephone No. |

Form PCT/ISA/210 (second sheet) (July 1992)

# INTERNATIONAL SEARCH REPORT

International application No.

PCT/JP00/03433

| C (Continuation). DOCUMENTS CONSIDERED TO BE RELEVANT | | |
|---|---|---|
| Category* | Citation of document, with indication, where appropriate, of the relevant passages | Relevant to claim No. |
| | & US, 5903608, A    & GB, 2303032, B<br>& FR, 2736229, A1  & IL, 118723, A<br>& KR, 97004285, A | |

Form PCT/ISA/210 (continuation of second sheet) (July 1992)